# EUROPÄISCHE PATENTSCHRIFT

(11) **EP 2 064 468 B1**
(45) Veröffentlichungstag und Bekanntmachung des Hinweises auf die Patenterteilung: **06.07.2011**
(21) Anmeldenummer: 07788534.1
(22) Anmeldetag: 24.08.2007
(51) Int. Cl.: F16K 1/44, F16K 7/12

(54) **ABSPERRVENTIL MIT LECKAGEFUNKTION**
SHUT-OFF VALVE HAVING A LEAKAGE FUNCTION
SOUPAPE D'ARRÊT AVEC FONCTION DE FUITE

(30) Priorität: 18.09.2006 CH 15042006; 03.10.2006 CH 15712006
(43) Veröffentlichungstag der Anmeldung: 03.06.2009
(73) Patentinhaber: Locher, Karl, 9050 Appenzell (CH)
(72) Erfinder: Locher, Karl, 9050 Appenzell (CH)
(74) Vertreter: Hepp Wenger Ryffel AG
(86) Internationale Anmeldenummer: PCT/EP2007/058837
(87) Internationale Veröffentlichungsnummer: WO 2008/034686

(56) Entgegenhaltungen:
- EP-A- 0 484 915
- WO-A-95/00782
- DE-U1- 20 009 697

## Beschreibung

Die Erfindung betrifft ein Absperrventil mit Leckagefunktion zum Absperren eines Durchflusskanals. Derartige Ventile werden beispielsweise in der Nahrungsmittel- oder in der Genussmittelindustrie eingesetzt, um sicherzustellen, dass im Falle eines lecken Ventilsitzes keine Kontamination in einer vorübergehend abgekoppelten Produktleitung stattfinden kann. So ist es beispielsweise beim Bierausschank erforderlich, die Bierleitung vom Fass zum Zapfhahn nach einer bestimmten Zeit mit einer Reinigungsflüssigkeit zu spülen. Die Reinigungsflüssigkeit wird dabei möglichst nahe am Fass in die Steigleitung eingespeist und es muss unter allen Umständen verhindert werden, dass die Reinigungsflüssigkeit das angeschlossene Fass kontaminiert.

Absperrventile mit Leckagefunktion sind seit langem bekannt und gebräuchlich. Es handelt sich dabei zumeist um sogenannte Doppelsitzventile, wobei zwischen den beiden Ventilsitzen ein Leckageraum angeordnet ist, der je nach Einsatzbereich mit Reinigungsflüssigkeit gespült werden kann, oder der unter Umständen auch als Sperrraum dient, der mit einem Sperrmedium unter Überdruck gesetzt werden kann. Ein derartiges Doppelsitzventil ist beispielsweise durch die DE 2009697 U1 bekannt geworden. Die beiden konzentrisch geführten Ventilschäfte sind dabei von einem Fallenbalg umgeben. Die Abdichtelemente des Ventils sind einstückig mit dem Fallenbalg ausgebildet. Dabei handelt es sich aber zumeist um massive Absperrventile mit Ventiltellern und Ventilsitzen aus Stahl und mit teilweise aufwendigen Antriebssystem. Derartige Absperrventile eignen sich nicht für kleinere Anlagen, die auch von einem Laien zu bedienen sind, wie beispielsweise die eingangs erwähnte Bierzapfstelle.

Es ist daher eine Aufgabe der Erfindung, ein möglichst einfaches und wartungsfreies Absperrventil mit verschiedenen Anschlussvarianten zu schaffen, das kostengünstig herstellbar ist und mit dem zuverlässig ein Leckageraum zur Verhinderung von Kontamination in einer vorübergehend abgekoppelten Produktleitung geschaffen werden kann. Diese Aufgabe wird erfindungsgemäss mit einem Absperrventil gelöst, das die Merkmale im Anspruch 1 aufweist.

Es hat sich überraschend herausgestellt, dass sich alternierend betätigbare Quetschventile mit je einem Sperrmittel hervorragend eignen, um einen Leckageraum gegenüber einem Eintrittskanal, einem Austrittskanal und wenigstens einem Leckagekanal abzudichten.

Weitere Vorteile können erreicht werden, wenn zum Leckageraum ein Spülkanal führt, der ein Spülventil aufweist, welches ebenfalls als Quetschventil mit einem Sperrmittel ausgebildet ist. Auf diese Weise kann der Leckageraum mit einem Spülmittel gereinigt werden, bevor der Durchflusskanal insgesamt wieder für Produkte freigegeben wird.

Konstruktiv besonders vorteilhaft ist es, wenn die Ventilsitze aller Quetschventile etwa auf der gleichen Ebene liegen und wenn die Quetschventile über eine gemeinsame Quetschmembran betätigbar sind. Mit einer derartigen Quetschmembran lassen sich zuverlässig und mit relativ geringen Betätigungskräften verschiedene Öffnungen alternierend öffnen und verschliessen. Die Quetschmembran kann dabei aus einem für Lebensmittel unbedenklichen flexiblen Material hergestellt sein.

Besonders vorteilhaft für den Betrieb einer ganzen Batterie von Absperrventilen der gleichen Art kann es sein, wenn der Leckagekanal und der Spülkanal als konzentrisch oder exzentrisch ineinander liegende Kanäle in den Leckageraum geführt sind, deren Eintrittsöffnungen mittels der Membran separat verschliessbar sind. Dies ermöglicht die gezielte Freigabe einzelner Absperrventile für eine Spülung des Leckageraums. Ausserdem ergibt sich eine sehr vorteilhafte und kompakte Bauweise. Zur Betätigung dieser konzentrischen oder exzentrischen Ventilanordnung ist es zudem zweckmässig, wenn die Sperrmittel für das Leckageventil und für das Spülventil zwei konzentrisch oder exzentrisch ineinander geführte Stössel sind, die alternierend oder gemeinsam gegen die Quetschmembran pressbar sind.

Alternativ ist es aber auch denkbar, dass der Leckagekanal und der Spülkanal als nebeneinander liegende Kanäle in den Leckageraum geführt sind, deren Eintrittsöffnungen mittels der Quetschmembran separat verschliessbar sind. Dabei ist es ersichtlicherweise erforderlich, dass auch für das Leckageventil und für das Spülventil nebeneinander angeordnete Sperrmittel eingesetzt werden, die alternierend oder gemeinsam gegen die Quetschmembran pressbar sind.

Das erfindungsgemässe Absperrventil kann besonders vorteilhaft als Dreiwege-Ventil betrieben werden, wenn wenigstens ein zweiter Austrittskanal mit einem zweiten Austrittsventil sowie mit einem zwischen dem Eintrittsventil und dem zweiten Austrittsventil angeordneten zweiten Leckageraum vorgesehen ist, von dem ein zweiter Leckagekanal mit einem zweiten Leckageventil wegführt, wobei das zweite Austrittsventil und das zweite Leckageventil ebenfalls alternierend betätigbare Quetschventile mit je einem Sperrmittel sind. Mit dieser Anordnung können von der gleichen Produktquelle zwei verschiedene Produktleitungen versorgt werden, wobei im normalen Betrieb der einen Produktleitung die zweite Produktleitung leckagesicher gespült werden kann. Ersichtlicherweise lassen sich nach dem gleichen Prinzip auch andere Mehrwege-Ventile mit mehreren Eingängen und mit mehreren Ausgängen bereitstellen.

Wenn zum Leckageraum und zum zweiten Leckageraum je ein Spülkanal führt, der ein Spülventil aufweist, welches ebenfalls als Quetschventil mit einem Sperrmittel ausgebildet ist, kann der Leckageraum unabhängig vom Produktedurchfluss gespült werden.

Eine weiterer Vorteil kann erzielt werden, wenn der Leckagekanal und der Spülkanal derart angeordnet sind, dass bezüglich durchströmender Spülflüssigkeit keine nicht durchströmbaren ToTräume vorhanden sind. Dies setzt beispielsweise voraus, dass keine von der Spülflüssigkeit nicht durchströmbaren Hinterschneidungen oder Aussparungen vorhanden sind.

Die Sperrmittel für die Quetschventile sind vorzugsweise pneumatisch und/oder elektromechanisch aktivierbar. Auch elektromagnetische Stellantriebe wären grundsätzlich denkbar.

Unabhängig von der Antriebsart ist es zweckmässig, wenn die Sperrmittel definiert derart steuerbar sind, dass in einer ersten Betriebsstellung bei geschlossenem Eintrittsventil und bei geschlossenem Austrittsventil das Leckageventil geöffnet ist und dass in einer zweiten Betriebsstellung bei geöffnetem Eintrittsventil und bei geöffnetem Austrittsventil das Leckageventil geschlossen ist, wobei beim Umschalten zwischen den beiden Betriebsstellungen immer in einer Zwischenbetriebsstellung das Eintrittsventil, das Austrittsventil und das Leckageventil geschlossen ist. Mit dieser definierten Steuerungsabfolge ist sichergestellt, dass keine Kontamination der Produktleitung erfolgen kann.

Um beispielsweise in einer ganzen Batterie von in Serie geschalteten Absperrventilen eine Leckage zu erkennen, kann es zweckmässig sein, wenn im Leckagekanal und/oder im Leckageraum ein Sichtfenster angeordnet ist. Zusätzlich zur rein optischen Erkennung einer Leckage ist es aber selbstverständlich auch denkbar, geeignete Leckagesensoren entweder in jedem einzelnen Absperrventil oder aber in einer Leckagesammelleitung anzuordnen.

Weitere Vorteile und Einzelmerkmale der Erfindung ergeben sich aus der nachfolgenden Beschreibung von Ausführungsbespielen und aus den Zeichnungen. Es zeigen:
- Figur 1: eine rein schematische Anordnung eines Absperrventils mit einem Leckagekanal,
- Figur 2: ein alternatives Ausführungsbeispiel mit einem zusätz- lichen Spülkanal,
- Figur 3: ein Absperrventil mit einem Leckagekanal und mit einer gemeinsamen Quetschmembran für alle Ventile,
- Figur 4: ein alternatives Ausführungsbeispiel mit einem Spülka- nal, dessen Eintrittsöffnung im Leckageraum mit der Austrittsöffnung des Leckagekanals zusammenfällt,
- Figur 5: ein weiteres Ausführungsbeispiel mit konzentrisch ge- führtem Spülkanal und Leckagekanal,
- Figur 6: zwei in Serie miteinander verbundene Absperrventile ge- mäss Figur 5,
- Figur 7: ein erfindungsgemässes Absperrventil mit pneumatisch aktvierbaren Sperrmitteln in einer ersten Betriebsstel- lung,
- Figur 8: das Absperrventil gemäss Figur 7 in einer zweiten Be- triebsstellung,
- Figur 9: das Absperrventil gemäss Figur 7 in einer dritten Be- triebsstellung,
- Figur 10: eine etwas modifizierte Version des Absperrventils ge- mäss den Figuren 7 bis 9,
- Figur 11: ein Absperrventil mit pneumatisch und mechanisch akti- vierbaren Sperrmitteln in einer ersten Betriebsstel- lung,
- Figur 12: das Absperrventil gemäss Figur 11 in einer zweiten Be- triebsstellung,
- Figur 13: das Absperrventil gemäss Figur 11 in einer dritten Be- triebsstellung,
- Figur 14: eine etwas vergrösserte Darstellung der mechanischen Steuerung des Leckageventils und des Spülventils,
- Figur 15: ein Ausführungsbeispiel mit nebeneinander geführtem Spülkanal und Leckagekanal,
- Figur 16a: ein Beispiel einer totraumfreien konzentrischen Kanal- führung für den Spülkanal und den Leckagekanal,
- Figur 16b: ein Schnitt durch die Ebene I-I gemäss Figur 16a,
- Figur 17: ein Ausführungsbeispiel eines Dreiwege-Ventils mit se- paraten Leckageräumen,
- Figur 18: ein Dreiwege-Ventil mit zusätzlicher Spülmöglichkeit für jeden Leckageraum,
- Figur 19: eine schematische Darstellung verschiedener Anschluss- varianten,
- Figur 20: ein abgewandeltes Ausführungsbeispiel eines Absperrven- tils mit elektromagnetischem Antrieb, und
- Figur 21: ein Ausführungsbeispiel mit exzentrisch geführtem Spül- kanal und Leckagekanal.

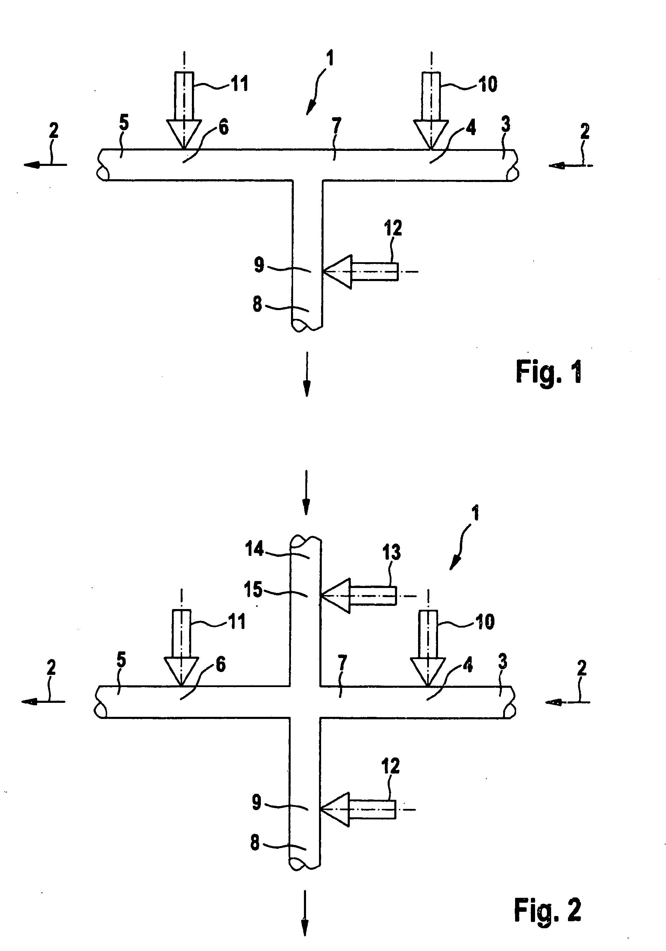

Wie aus Figur 1 ersichtlich ist, weist ein rein schematisch dargestelltes Absperrventil 1 eine Durchflussleitung 2 auf, durch welche in Pfeilrichtung beispielsweise Bier transportierbar ist. Das Ventil weist einen Eintrittskanal 3 auf, der mit einem Eintrittsventil 4 absperrbar ist. Ausserdem weist das Ventil einen Austrittskanal 5 auf, der mit einem Austrittsventil 6 absperrbar ist. Zwischen dem Eintrittsventil und dem Austrittsventil wird ein Leckageraum 7 gebildet, von dem ein Leckagekanal 8 wegführt. Der Leckagekanal ist mit einem Leckageventil 9 versperrbar. Bei allen Ventilen handelt es sich um Quetschventile, die über geeignete Sperrmittel 10, 11, 12 betätigt bzw. zusammengequetscht werden können. Die einfachste Version eines derartigen Absperrventils besteht aus einem T-förmigen flexiblen Schlauch, der in die Durchflussleitung 2 integriert ist. Die Wandung des Schlauchs bildet dabei ersichtlicherweise am Eintrittskanals, am Austrittskanal und am Leckagekanal das eigentliche Ventil.

Die Funktion dieses Ventils ist verhältnismässig einfach. Beim Abkoppeln der Durchflussleitung 2 beispielsweise zum Spülen mit Reinigungsflüssigkeit in Strömungsrichtung nach dem Austrittsventil 6 werden das Eintrittsventil 4 und das Austrittsventil 6 geschlossen, während das Leckageventil 9 geöffnet wird. Reinigungsflüssigkeit, welche trotzdem das Austrittsventil 6 penetrieren könnte, kann nicht in den Eintrittskanal gelangen, sondern wird über den Leckagekanal 8 abgeführt.

Beim Ausführungsbeispiel gemäss Figur 2 ist das Absperrventil 1 im Wesentlichen gleich aufgebaut wie gemäss Figur 1. Allerdings ist der Leckageraum 7 auch noch an einen Spülkanal 14 angeschlossen, der über ein Spülventil 15 absperrbar ist. Dieses verfügt über ein eigenes Sperrmittel 13. Bei normalem Produktedurchfluss durch die Durchflussleitung 2 ist sowohl das Leckageventil 9 als auch das Spülventil 15 geschlossen, während das Eintrittsventil 4 und das Austrittsventil 6 geöffnet sind. Bei gesperrtem Ventil werden zuerst simultan das Eintrittsventil 4 und das Austrittsventil 6 verschlossen, bevor wenigstens das Leckageventil 9 geöffnet wird. Gleichzeitig oder nachträglich kann auch noch das Spülventil 15 geöffnet werden, um den Leckageraum 9 mit einer neutralen Spülflüssigkeit zu spülen, bevor die Durchflussleitung 2 wiederum freigegeben wird.

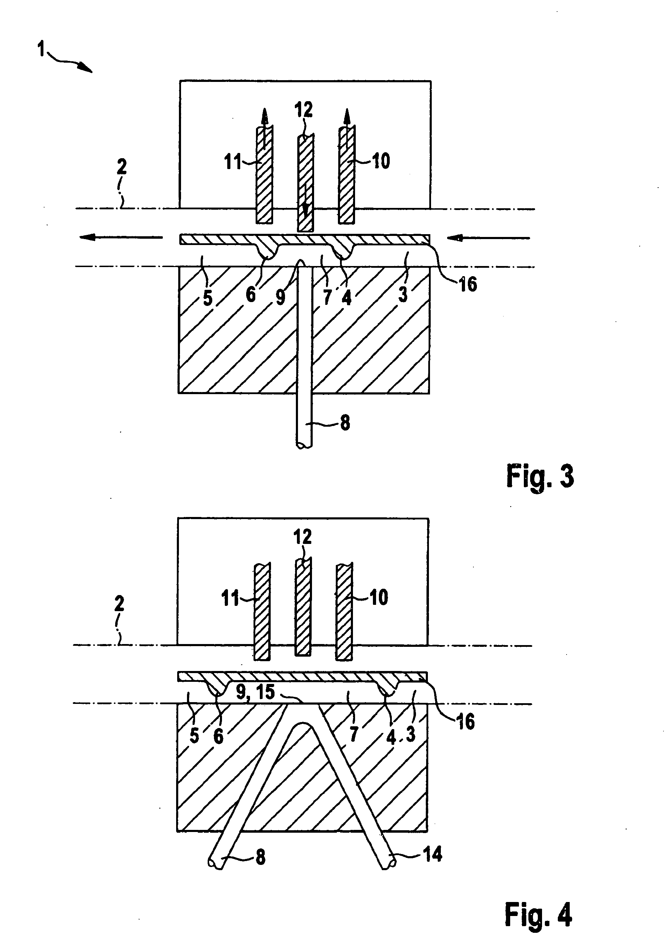

Das gleiche Funktionsprinzip wie in Figur 1, jedoch mit einer gemeinsamen Quetschmembran für die verschiedenen Ventile ist in Figur 3 dargestellt. Die Quetschmembran 16 erstreckt sich länglich über den gesamten Leckageraum und teilweise in den Eintrittskanal 3 bzw. in den Austrittskanal 5. Die Ventilsitze für das Eintrittsventil 4, das Austrittsventil 6 und für das Leckageventil 9 liegen dabei ersichtlicherweise auf einer gemeinsamen Ebene, sodass die Quetschmembran 16 mit den alternierend betätigbaren Sperrmitteln 10, 11 und 12 gequetscht werden kann. Bei diesen Sperrmitteln handelt es sich um Stössel, die mit Hilfe einer hier nicht näher dargestellten Steuerung angehoben oder gesenkt werden können. Bei normalem Produktedurchfluss durch die Durchflussleitung 2 sind die Sperrmittel 10 und 11 angehoben, während das Sperrmittel 12 abgesenkt ist und dabei ersichtlicherweise das Leckageventil 9 verschliesst. Dagegen werden zum Schliessen des Ventils die beiden Sperrmittel 10 und 11 abgesenkt, sodass sich das Eintrittsventil 4 und das Austrittsventil 6 schliessen, während das Sperrmittel 12 angehoben wird und die Quetschmembran 16 damit das Leckageventil 9 bzw. den Leckagekanal 8 freigibt.

Von der Funktion her vergleichbar ist das Absperrventil gemäss Figur 4. Hier führt allerdings noch ein Spülkanal 14 in den Leckageraum 7, wobei die Eintrittsöffnung des Spülkanals mit der Austrittsöffnung des Leckagekanals 8 zusammenfällt. Diese gemeinsame Öffnungen bilden dabei ein gemeinsames Leckageventil 9 bzw. ein Spülventil 15, welches durch Absenken des Sperrmittels 12 geschlossen werden kann. Die Funktion des Eintrittsventils 4 und des Austrittsventils 6 ist gleich wie beim Ausführungsbeispiel gemäss Figur 3. Ersichtlicherweise ist es hier nicht möglich, beispielsweise den Spülkanal 14 unabhängig vom Leckagekanal 8 gegenüber dem Leckageraum abzusperren.

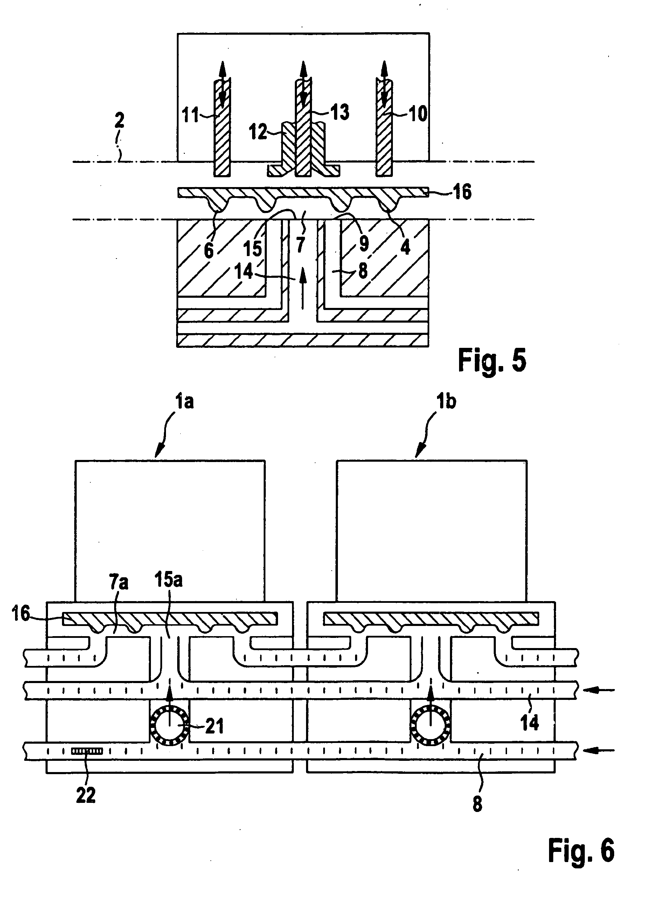

Eine derartige separate Aktivierung ist jedoch beim Ausführungsbeispiel gemäss Figur 5 möglich. Wie dargestellt, ist hier der Spülkanal 14 konzentrisch im Leckagekanal 8 bis zum Leckageraum 7 geführt, sodass der Leckagekanal 8 eine kreisringförmige Mündungsöffnung bildet. Gegenüber dieser konzentrischen Kanalanordnung auf der Rückseite der Quetschmembran 16 ist ein konzentrischer Doppelstössel angeordnet, der das Sperrmittel 12 für das Leckageventil 9 und das Sperrmittel für das Spülventil 15 bildet. Ersichtlicherweise lässt sich derart der Spülkanal separat verschliessen, indem der innere Stössel 13 gegen die Quetschmembran gepresst wird. Das Leckageventil 9 bleibt dabei offen, sodass bei geschlossenem Eintrittsventil 4 und Austrittsventil 6 Leckage abgeführt werden kann. Alternativ kann zusätzlich auch noch der Spülkanal 14 geöffnet werden, was eine Spülung des Leckageraums 7 erlaubt. Der Leckageraum lässt sich dabei auch gegenüber dem Durchflusskanal 2 separat abdichten, sodass Produkt durchführbar ist, während der Leckageraum gespült wird. Werden die beiden Stössel 12 und 13 gemeinsam abgesenkt, ist sowohl der Leckagekanal 8 als auch der Spülkanal 14 vom Leckageraum 7 abgesperrt und bei geöffnetem Eintrittsventil 4 und Austrittsventil 6 kann normal Produkt durch die Durchflussleitung strömen.

Besonders vorteilhaft wirkt sich die anhand von Figur 5 beschriebene Konstruktion dann aus, wenn wie gemäss Figur 6 eine ganze Batterie von Absperrventilen 1a und 1b in Serie zusammen gekoppelt werden. Wie dargestellt, wird dabei ein gemeinsamer, an sämtlichen Absperrventilen vorbei geführter Leckagekanal 8 sowie ein gemeinsamer Spülkanal 14 gebildet. Trotzdem ist es nicht zwingend erforderlich, dass auch sämtliche Absperrventile gemeinsam und in Serie gespült werden müssen. Vielmehr erlaubt es die individuelle Absperrmöglichkeit von Leckagekanal 8 und Spülkanal 14 an jedem einzelnen Absperrventil eine selektive Spülung vorzunehmen. So könnte beispielsweise beim Absperrventil 1 in einem Sichtfenster 21 erkennbar sein, dass Leckage in den Leckagekanal 8 penetriert. Zur Spülung des betreffenden Leckageraums 7a kann das Spülventil 15a geöffnet werden, während beim Absperrventil 1b keine Spülung erfolgt. Das Vorhandensein von Leckage im Leckagekanal 8 könnte beispielsweise durch einen geeigneten Sensor 22 ermittelt werden.

Die in den Figuren 3 bis 6 beschriebenen Ausführungsbeispiele mit der gemeinsamen Quetschmembran haben den erheblichen Vorteil, dass kein Totraum verbleibt, in dem sich Bakterienherde ansiedeln könnten. Dies wird primär durch die Anordnung der Ven-tilsitze auf einer gemeinsamen Ebene erreicht.

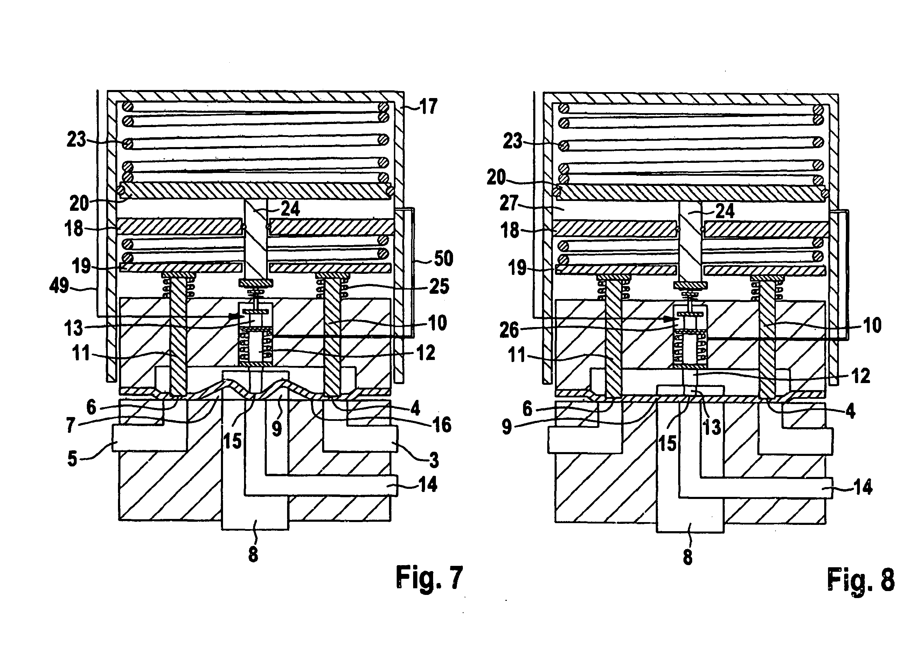

In den Figuren 7 bis 9 ist ein weiteres Ausführungsbeispiel eines Absperrventils dargestellt, das im Wesentlichen dem Ausführungsbeispiel gemäss Figur 5 entspricht. Gezeigt wird hier primär wie die einzelnen Sperrmittel für die Ventile im gemeinsamen Ventilgehäuse 17 zusammenwirken. Auf die gemeinsame Quetschmembran 16 wirken als Sperrmittel die beiden Stössel 10 und 11 für die Betätigung des Eintrittsventils 4 bzw. des Austrittsventils 6. Diese beiden Stössel sind über eine gemeinsame Steuerplatte 19 beaufschlagbar, sodass sie gemäss ihrer Funktion gemeinsam gehoben oder gesenkt werden können. Im Zentrum sind die beiden konzentrischen Stössel 12 und 13 angeordnet, die jeweils separat betätigbar sind. Ein von einer Feder 23 beaufschlagter Kolben 20 verfügt über eine Kolbenstange 24, die in einer fest im Ventilgehäuse 17 verankerten Stützplatte 18 geführt ist. In der ersten Betriebsstellung gemäss Figur 7 sind das Eintrittsventil 4 und das Austrittsventil 6 geschlossen, während der Leckageraum 7 geöffnet ist. Das Spülventil 15 ist dabei geschlossen.

In der zweiten Betriebsstellung gemäss Figur 8 sind das Eintrittsventil 4 und Austrittsventil 6 ebenfalls verschlossen. Verschlossen ist auch das Spülventil 15 und das Leckageventil 9.

Zum Erreichen dieser Betriebsstellung strömt Druckluft über die symbolisch dargestellte Hauptleitung 49 in die kleine Druckkammer 26, sodass der konzentrische äussere Stössel 12 abgesenkt wird und das Leckageventil 9 schliesst. Ein Öffnen des Eintrittsventils 4 und des Austrittsventils 6 ist vor Erreichen dieser Betriebsstellung aus Sicherheitsgründen nicht möglich.

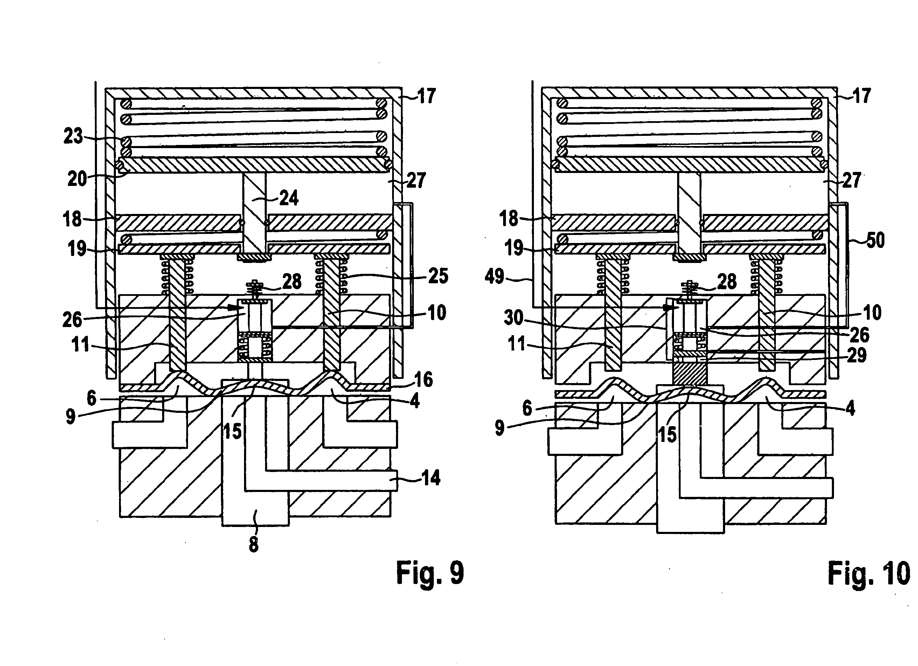

Dies wird dadurch erreicht, dass erst nach dem Absenken des äusseren Stössels 12 Druckluft über die Verbindungsleitung 50 auch noch in die grosse Druckkammer 27 strömen kann, sodass der Kolben 20 gegen die Kraft der Feder 23 angehoben wird und dabei mit seiner Kolbenstange 24 die Steuerplatte 19 anhebt. Die Druckfedern 25 werden dabei entlastet und die beiden Stössel 11 und 12 werden angehoben. Diese Position ist in Figur 9 dargestellt.

In der dritten Betriebsstellung gemäss Figur 9 sind das Eintrittsventil 4 und das Austrittsventil 6 geöffnet und es fliesst normal Produkt durch die Durchflussleitung 2, während das Spülventil geöffnet bleibt. In dieser Betriebsstellung ist das Leckageventil 9 geschlossen und der Leckageraum von der Durchflussleitung abgedichtet, sodass er individuell spülbar ist.

Die Öffnung des Spülventils 15 wird dadurch bewirkt, dass die Kolbenstange 24 vom federbelasteten Steuerschieber 28 abhebt, sodass der konzentrische innere Stössel 13 sich unter Federvorspannung anheben kann.

Im Ausführungsbeispiel gemäss Figur 10 ist das Absperrventil in der gleichen Betriebsstellung dargestellt, wie bei Figur 9. Bei dieser Bauart ist jedoch eine definierte Entlastung möglich, wobei eine Zusatzdruckkammer 29 und ein Verbindungskanal 30 zur kleinen Druckkammer 26 vorgesehen ist. Bei Druckaufbau in der kleinen Druckkammer 26 kann somit auch Druckluft in die Zusatzdruckkammer 29 strömen.

Bei vollständig geöffnetem Pneumatik-Hauptventil ist die Zusatzdruckkammer wiederum abgeschlossen, weil sie vom Verbindungskanal getrennt ist. Leckageventil 9 und Spülventil 15 sind dann geschlossen. Beim Entlasten des Pneumatikdrucks wird die Zusatzdruckkammer 29 erst freigegeben wenn das Eintrittsventil 4 und das Austrittsventil 6 geschlossen sind, weil erst bei ganz abgesenkter Kolbenstange 24 der Verbindungskanal wieder freigegeben wird. Damit ist gewährleistet, dass das Leckageventil 9 erst öffnet, wenn die Produktleitung geschlossen ist. Diese Sicherheitsfunktion beim Entlasten könnte auch rein mechanisch erzielt werden.

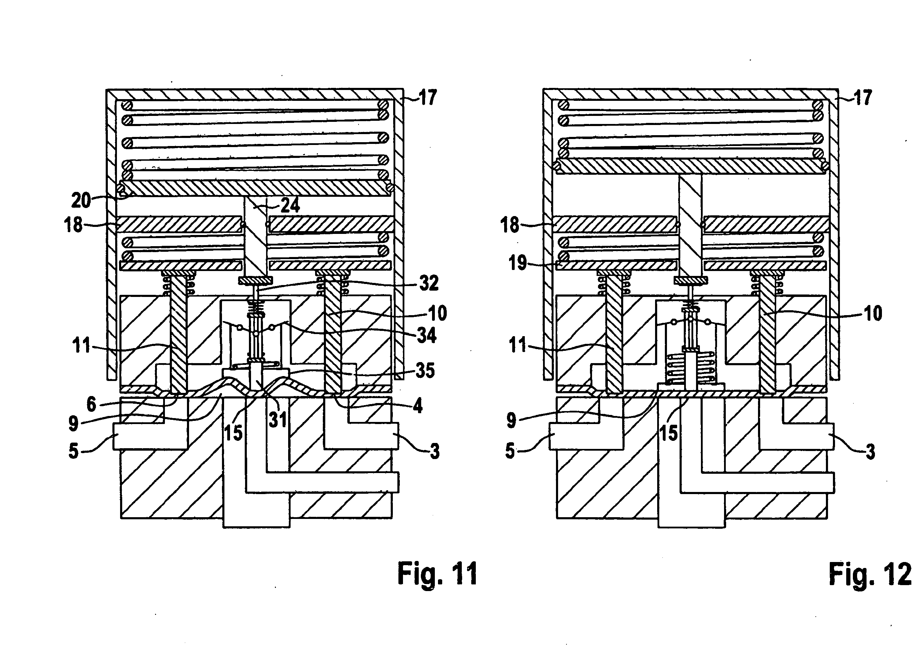

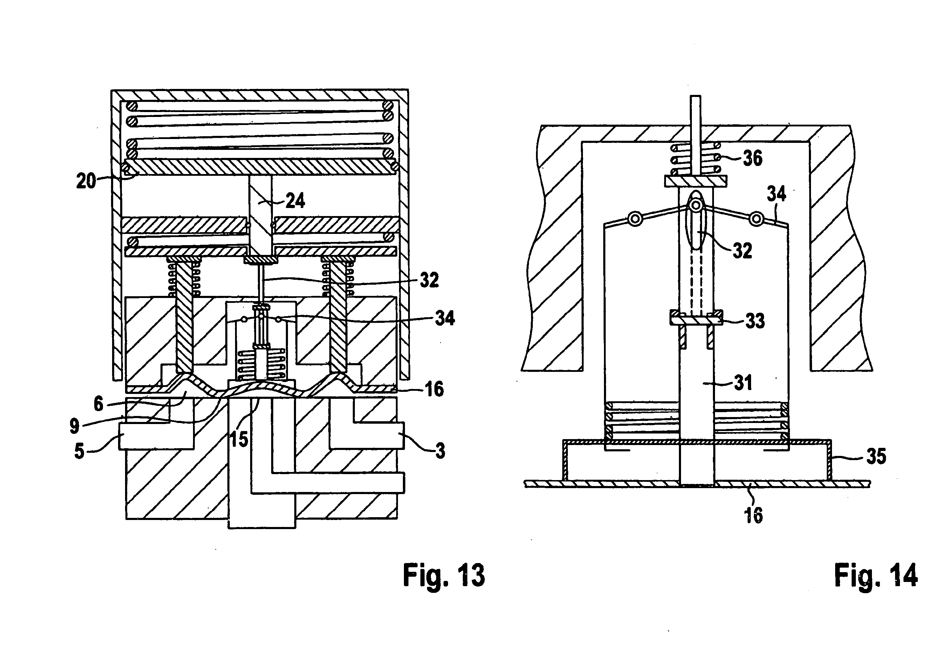

Beim Ausführungsbeispiel gemäss den Figuren 11 bis 13 ist für die Betätigung des Leckageventils 9 eine mechanische Lösung vorgesehen, die in Figur 14 etwas genauer dargestellt ist. Die Betätigung des Spülventils erfolgt dabei über einen Sperrstössel 31, der vertikal verschiebbar an einer Betätigungsspindel 32 gelagert ist. Ein Mitnehmer 33 am Ende der Spindel 32 kann den Sperrstössel 31 entweder gegen die Kraft einer Druckfeder 36 anheben oder freigeben, sodass er gegen die Quetschmembran 16 gepresst wird.

An der Spindel 32 ist auch eine Gelenkwippe 34 angelenkt, sodass sich je nach der Stellung der Spindel 32 ein gegen die Quetschmembran 16 pressbarer Schliessteller 35 hebt oder senkt.

In der ersten Betriebsstellung gemäss Figur 11 ist das Absperrventil pneumatisch drucklos, d.h., die Druckfeder 23 presst den Kolben 20 mit ihrer Kolbenstange 24 nach unten, wobei die Spindel 32 den Sperrstössel 31 freigibt. Gleichzeitig wird die Gelenkwippe 34 in eine Position gefahren, in der sie den Schliessteller 35 anhebt. In dieser Stellung ist das Spülventil 15 geschlossen und das Leckageventil 9 geöffnet. Gleichzeitig sind Eintrittsventil 4 und Austrittsventil 6 geschlossen.

In der Betriebsstellung gemäss Figur 12 strömt Druckluft in die grosse Druckkammer 27 und die Kolbenstange 24 hebt die Spindel 32 und bewegt dabei die Gelenkwippe 34 in eine Position, in welcher der Schliessteller 35 das Leckageventil schliesst

Beim weiteren Anheben der Kolbenstange 24 gemäss Figur 13 wird der Sperrstössel 31 angehoben, sodass das Spülventil freigibt. Gleichzeitig wird aber auch die Steuerplatte 19 angehoben, sodass sich das Eintrittsventil 4 und das Austrittsventil 6 öffnen. Das durch die Durchflussleitung fliessende Produkt umströmt jetzt den abgeschlossenen Leckageraum, der intervallweise oder permanent gespült werden kann. Selbstverständlich wäre es auch denkbar, im Leckageraum einen geringfügigen Überdruck aufzubauen, um das Eintreten von Produkt aus der Durchflussleitung zu vermeiden.

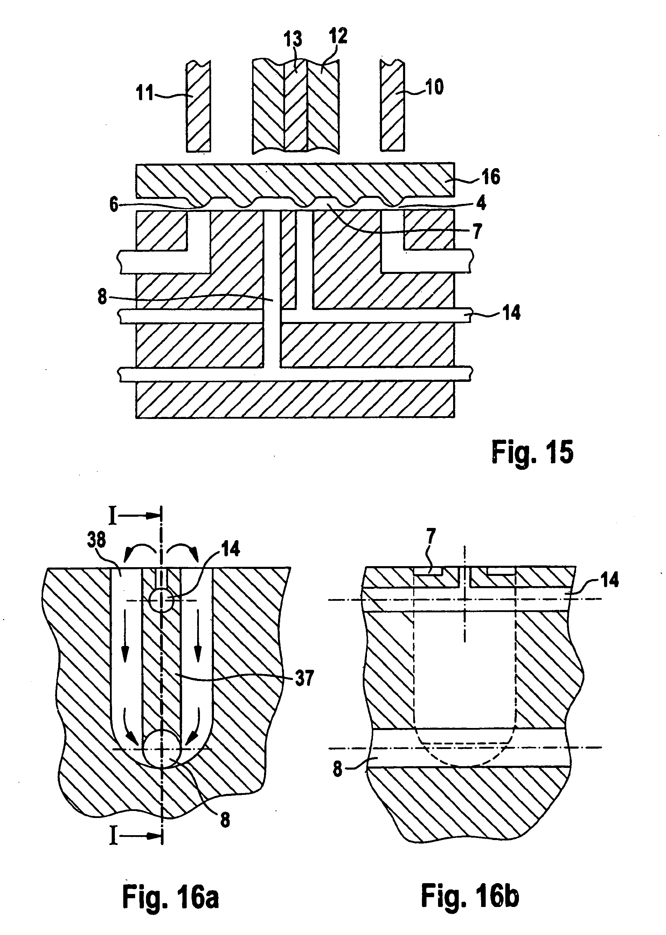

Das Ausführungsbeispiel gemäss Figur 15 ist funktional vergleichbar mit demjenigen gemäss Figur 5. Der Spülkanal 14 und der Leckagekanal 8 münden jedoch nicht konzentrisch in den Leckageraum 7, sondern nebeneinander. Die Sperrmittel 12 und 13 können jedoch trotzdem als konzentrisch ineinander liegende Stössel ausgebildet sein.

Die Figuren 16a und 16b zeigen, wie der Leckagekanal 8 und der Spülkanal 14 angeordnet sein können, dass trotz konzentrischer Anordnung Toträume vermieden werden. Die beiden Kanäle liegen dabei auf einer vertikalen Ebene übereinander, wobei ein Materialblock die Kanalwände miteinander verbindet. Ausgehend vom kreisringförmigen Leckageraum 7 führen seitliche Taschen oder Hohlräume 38 auf beiden Seiten des Materialblocks 37 nach unten und öffnen sich beidseitig in den Leckagekanal 8. Leckage fliesst dabei auch im drucklosen Zustand immer nach unten in den vertikalen Leckagekanal 8 und kann sich nicht an Hinterschneidungen ansammeln, wobei sich Bakterienherde bilden könnten. Beim Spülen des Leckageraums 7 fliesst unter Druck Spülflüssigkeit durch den Spülkanal 14 und zurückbleibende Leckage wird durch den Leckagekanal 8 weggespült.

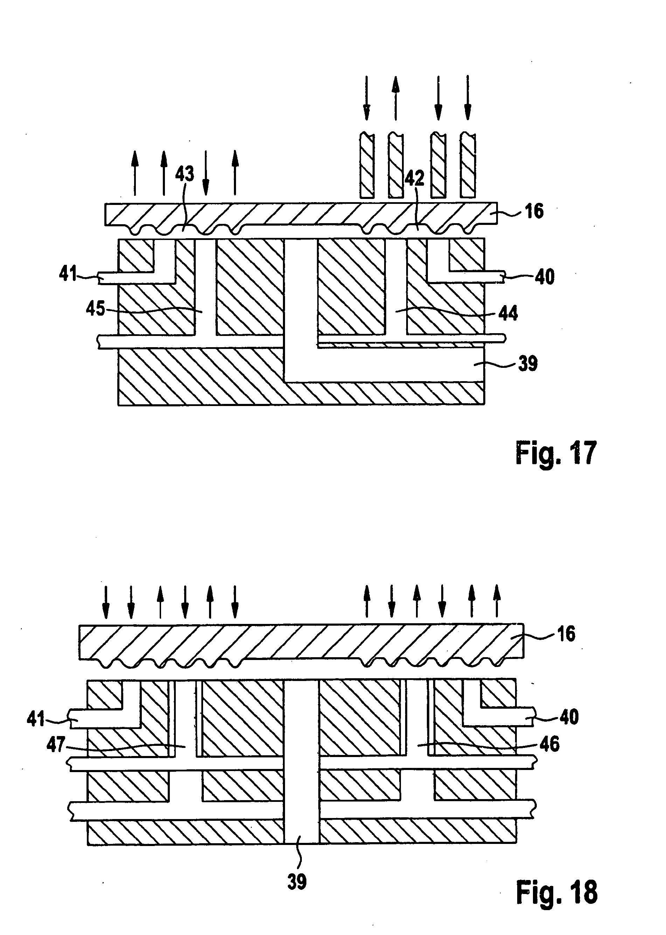

Das Ausführungsbeispiel gemäss Figur 17 zeigt nach dem bisher beschriebenen Prinzip ein Dreiwege-Ventil, das ausgehend von einer Produkthauptleitung 39 die Versorgung einer ersten Austrittsleitung 40 und einer zweiten Austrittsleitung 41 ermöglicht. Dementsprechend ist ein erster Leckageraum 42 und ein zweiter Leckageraum 43 vorgesehen. Diese Leckageräume verfügen ebenfalls über separate Leckagekanäle 44 und 45, die jedoch zu einem gemeinsamen Sammelkanal führen. Die Betätigung des Eintrittsventils, des Austrittsventils und des Leckageventils erfolgt für jeden Austrittskanal separat auf gleiche bzw. ähnliche Art und Weise wie bei den beschriebenen Ausführungsbeispielen. Das Ausführungsbeispiel gemäss Figur 18 zeigt ein Dreiwege-Ventil analog zum Ausführungsbeispiel gemäss Figur 17, jedoch noch mit einer zusätzlichen Spülmöglichkeit über einen ersten Spülkanal 46 und einen zweiten Spülkanal 47. Diese beiden Spülkanäle führen wiederum zu einer gemeinsamen Sammelleitung. Dementsprechend ist auch wieder je ein separates Spülventil erforderlich, um den ihm zugeordneten Spülkanal abzusperren.

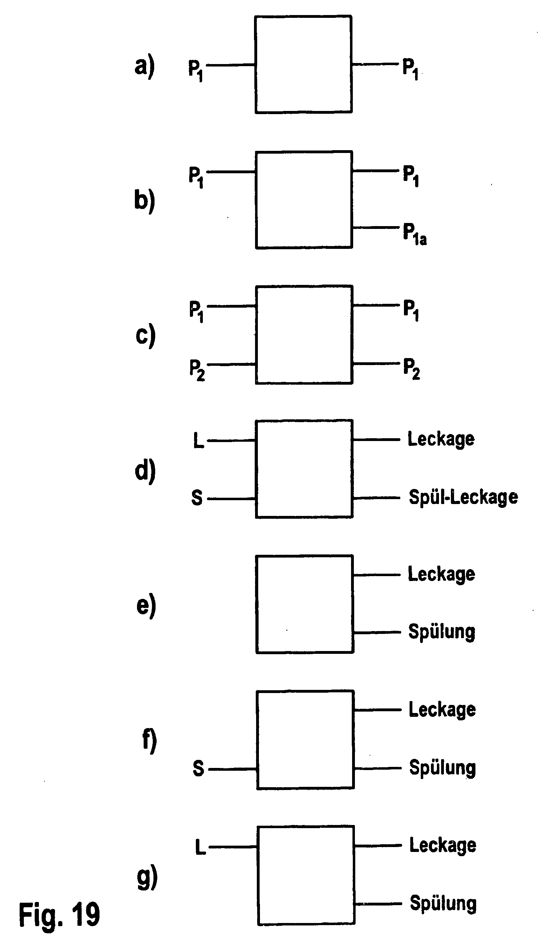

Die schematische Darstellung gemäss Figur 19 zeigt lediglich die unterschiedlichen Anschlussmöglichkeiten eines erfindungsgmässen Absperrventils. Die Produktanschlussmöglichkeiten sind Folgende:
a) Durchfluss von Produkt P1
b) Aufteilung von Produkt P1 über ein Dreiwege-Ventil in P1 und P1a
c) Parallele Führung von Produkt P1 und Produkt P2

Die Anschlussmöglichkeiten bezüglich Leckage und Spülmittel sind Folgende:
d) Leckage und Spülung sind parallel geführt und haben an jedem Ventil einen Eingang und einen Ausgang
e) Leckage und Spülung haben an jedem Ventil nur einen Eingang und einen Ausgang
f) Leckage hat lediglich einen Ausgang und die Spülung hat für Serienschaltung einen Eingang und einen Ausgang
g) Die Leckage hat für Serienschaltung einen Eingang und einen Ausgang und die Spülung hat lediglich einen Eingang.

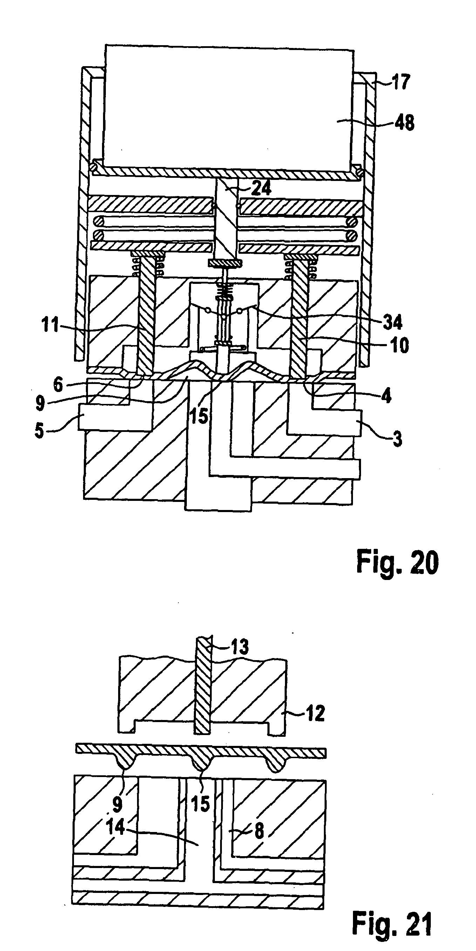

Das Ausführungsbeispiel gemäss Figur 20 ist bezüglich der Steuermittel gleich aufgebaut, wie dasjenige gemäss den Figuren 11 bis 13. Die Betätigung erfolgt jedoch vollständig ohne Pneumatik, wobei die Betätigung der Kolbenstange 24 über einen Hubmagnet 48 erfolgt.

Schliesslich zeigt das Ausführungsbeispiel gemäss Figur 21 noch einen ähnliche Ventilanordnung für das Leckageventil und für das Spülventil wie bei Figur 5, wobei allerdings der Spülkanal 14 nicht konzentrisch, sondern exzentrisch im Leckagekanal 8 geführt ist. Dementsprechend exzentrisch ist auch die Anordnung der beiden Stössel 12 und 13.

## Patentansprüche

1. Absperrventil (1) mit Leckagefunktion zum Absperren eines Durchflusskanals (2), mit
- einem Eintrittskanal (3) mit einem Eintrittsventil (4),
- einem Austrittskanal (5) mit einem Austrittsventil (6),
- einem zwischen dem Eintrittsventil und dem Austrittsventil angeordneten Leckageraum (7),
- sowie mit wenigstens einem vom Leckageraum wegführenden Leckagekanal (8) mit einem Leckageventil (9),
**dadurch gekennzeichnet, dass**
- die Ventile alternierend betätigbare Quetschventile bestehend aus einem flexiblen Schlauch oder aus einer flexiblen Quetschmembran sind, wobei jedes Quetschventil ein Sperrmittel (10, 11, 12) aufweist, das gegen den Schlauch bzw. gegen die Quetschmembran pressbar ist.

2. Absperrventil nach Anspruch 1, **dadurch gekennzeichnet, dass** zum Leckageraum (7) ein Spülkanal (14) führt, der ein Spülventil (15) aufweist, welches ebenfalls als Quetschventil mit einem Sperrmittel (13) ausgebildet ist.

3. Absperrventil nach Anspruch 1 oder 2, **dadurch gekennzeichnet, dass** die Ventilsitze aller Quetschventile etwa auf der gleichen Ebene liegen und dass die Quetschventile über eine gemeinsame Quetschmembran (16) betätigbar sind.

4. Absperrventil nach Anspruch 2 und Anspruch 3, **dadurch gekennzeichnet, dass** der Leckagekanal (8) und der Spülkanal (14) als konzentrisch oder exzentrisch ineinander liegende Kanäle in den Leckageraum (7) geführt sind, deren Eintrittsöffnungen mittels der Quetschmembran separat verschliessbar sind.

5. Absperrventil nach Anspruch 4, **dadurch gekennzeichnet, dass** die Sperrmittel für das Leckageventil (9) und für das Spülventil (15) zwei konzentrisch oder exzentrisch ineinander geführte Stössel sind, die alternierend oder gemeinsam gegen die Quetschmembran pressbar sind.

6. Absperrventil nach Anspruch 2 und Anspruch 3, **dadurch gekennzeichnet, dass** der Leckagekanal (8) und der Spülkanal (14) als nebeneinander liegende Kanäle in den Leckageraum (7) geführt sind, deren Eintrittsöffnungen mittels der Quetschmembran (16) separat verschliessbar sind.

7. Absperrventil nach Anspruch 1, **dadurch gekennzeichnet, dass** wenigstens ein zweiter Austrittskanal mit einem zweiten Austrittsventil sowie mit einem zwischen dem Eintrittsventil und dem zweiten Austrittsventil angeordneten zweiten Leckageraum vorgesehen ist, von dem ein zweiter Leckagekanal mit einem zweiten Leckageventil wegführt, wobei das zweite Austrittsventil und das zweiten Leckageventil ebenfalls alternierend betätigende Quetschventile mit je einem Sperrmittel sind.

8. Absperrventil nach Anspruch 7, **dadurch gekennzeichnet, dass** zum Leckageraum und zum zweiten Leckageraum je ein Spülkanal führt, der ein Spülventil aufweist, welches ebenfalls als Quetschventil mit einem Sperrmittel ausgebildet ist.

9. Absperrventil nach Anspruch 4, **dadurch gekennzeichnet, dass** der Leckagekanal und der Spülkanal derart angeordnet sind, dass bezüglich durchströmender Spülflüssigkeit keine nicht durchströmbaren Toträume vorhanden sind.

10. Absperrventil nach einem der Ansprüche 1 bis 9, **dadurch gekennzeichnet, dass** im Leckagekanal (8) und/oder im Leckageraum (7) ein Sichtfenster angeordnet ist.

11. Absperrventil nach einem der Ansprüche 1 bis 10, **dadurch gekennzeichnet, dass** die Sperrmittel für die Quetschventile pneumatisch und/oder elektromechanisch aktivierbar sind.

12. Absperrventil nach Anspruch 11, **dadurch gekennzeichnet, dass** die Sperrmittel definiert derart steuerbar sind, dass in einer ersten Betriebsstellung bei geschlossenem Eintrittsventil und bei geschlossenem Austrittsventil das Leckageventil geöffnet ist und dass in einer zweiten Betriebsstellung bei geöffnetem Eintrittsventil und bei geöffnetem Austrittventil das Leckageventil geschlossen ist, wobei beim Umschalten zwischen den beiden Betriebsstellungen immer in einer Zwischenbetriebsstellung das Eintrittsventil, das Austrittsventil und das Leckageventil geschlossen ist.

13. Absperrventil anordnung , **dadurch gekennzeichnet, dass** die Leckagekanäle und die Spülkanäle mehrerer Absperrventile (1a, 1b) nach Anspruch 2 und einem der Ansprüche 3 bis 12 miteinander verbunden sind.

## Claims

1. Shut-off valve (1) having a leakage function for shutting off a throughflow channel (2), having
- an inlet channel (3) having an inlet valve (4),
- an outlet channel (5) having an outlet valve (6),
- a leakage space (7) arranged between the inlet valve and the outlet valve,
- and having at least one leakage channel (8) that leads away from the leakage space and has a leakage valve (9),
**characterized in that**
- the valves are pinch valves that can be operated alternately and consist of a flexible tube or of a flexible pinch diaphragm, wherein each pinch valve has a blocking means (10, 11, 12) which can be pressed against the tube or against the pinch diaphragm.

2. Shut-off valve according to Claim 1, **characterized in that** a flushing channel (14) leads to the leakage space (7) and has a flushing valve (15) which is likewise formed as a pinch valve having a blocking means (13).

3. Shut-off valve according to Claim 1 or 2, **characterized in that** the valve seats of all the pinch valves lie approximately on the same plane, and **in that** the pinch valves can be actuated via a common pinch diaphragm (16).

4. Shut-off valve according to Claim 2 and Claim 3, **characterized in that** the leakage channel (8) and the flushing channel (14) are guided into the leakage space (7) as channels which are located concentrically or eccentrically one inside the other and the inlet openings of which can be closed separately by means of the pinch diaphragm.

5. Shut-off valve according to Claim 4, **characterized in that** the blocking means for the leakage valve (9) and for the flushing valve (15) are two push rods which are guided concentrically or eccentrically one inside the other and which can be pressed alternately or jointly against the pinch diaphragm.

6. Shut-off valve according to Claim 2 and Claim 3, **characterized in that** the leakage channel (8) and the flushing channel (14) are guided into the leakage space (7) as channels which are located alongside one another and the inlet openings of which can be closed separately by means of the pinch diaphragm (16).

7. Shut-off valve according to Claim 1, **characterized in that** there is provided at least a second outlet channel having a second outlet valve and having a second leakage space arranged between the inlet valve and the second outlet valve, a second leakage channel having a second leakage valve leading away from said second leakage space, wherein the second outlet valve and the second leakage valve are likewise pinch valves that can be operated alternately and each have a blocking means.

8. Shut-off valve according to Claim 7, **characterized in that** a respective flushing channel leads to the leakage space and to the second leakage space and has a flushing valve which is likewise formed as a pinch valve having a blocking means.

9. Shut-off valve according to Claim 4, **characterized in that** the leakage channel and the flushing channel are arranged such that, with regard to flushing liquid which flows through, there are no dead spaces through which flow cannot take place.

10. Shut-off valve according to one of Claims 1 to 9, **characterized in that** a viewing window is arranged in the leakage channel (8) and/or in the leakage space (7).

11. Shut-off valve according to one of Claims 1 to 10, **characterized in that** the blocking means for the pinch valves can be activated pneumatically and/or electromechanically.

12. Shut-off valve according to Claim 11, **characterized in that** the blocking means can be controlled in a defined manner such that in a first operating position the leakage valve is open with the inlet valve closed and the outlet valve closed, and **in that** in a second operating position the leakage valve is closed with the inlet valve open and the outlet valve open, wherein the inlet valve, the outlet valve and the leakage valve are always closed in an intermediate operating position during switchover between the two operating positions.

13. Shut-off valve arrangement, **characterized in that** the leakage channels and the flushing channels of a plurality of shut-off valves (1a, 1b) according to Claim 2 and one of Claims 3 to 12 are connected together.

## Revendications

1. Soupape d'arrêt (1) avec fonction de fuite pour le blocage d'un canal d'écoulement (2), comprenant :
- un canal d'entrée (3) avec une soupape d'entrée (4),
- un canal de sortie (5) avec une soupape de sortie (6),
- un espace de fuite (7) disposé entre la soupape d'entrée et la soupape de sortie,
- et au moins un canal de fuite (8) conduisant hors de l'espace de fuite, avec une soupape de fuite (9),
**caractérisée en ce que**
- les soupapes sont des soupapes à pince pouvant être actionnées en alternance constituées d'un tuyau flexible ou d'une membrane à pince flexible, chaque soupape à pince présentant un moyen d'arrêt (10, 11, 12) qui peut être pressé contre le tuyau ou contre la membrane à pince.

2. Soupape d'arrêt selon la revendication 1, **caractérisée en ce qu'**un canal de rinçage (14) conduit vers l'espace de fuite (7), lequel présente une soupape de rinçage (15) qui est réalisée également sous forme de soupape à pince avec un moyen d'arrêt (13).

3. Soupape d'arrêt selon la revendication 1 ou 2, **caractérisée en ce que** les sièges de soupape de toutes les soupapes à pince se situent approximativement dans le même plan et **en ce que** les soupapes à pince peuvent être actionnées par le biais d'une membrane à pince commune (16).

4. Soupape d'arrêt selon la revendication 2 et la revendication 3, **caractérisée en ce que** le canal de fuite (8) et le canal de rinçage (14) sont guidés, en tant que canaux disposés concentriquement ou excentriquement l'un dans l'autre, dans l'espace de fuite (7), dont les ouvertures d'entrée peuvent être fermées séparément au moyen de la membrane à pince.

5. Soupape d'arrêt selon la revendication 4, **caractérisée en ce que** les moyens d'arrêt pour la soupape de fuite (9) et pour la soupape de rinçage (15) sont deux poussoirs guidés concentriquement ou excentriquement l'un dans l'autre, qui peuvent être pressés en alternance ou en commun contre la membrane à pince.

6. Soupape d'arrêt selon la revendication 2 et la revendication 3, **caractérisée en ce que** le canal de fuite (8) et le canal de rinçage (14) sont guidés, en tant que canaux juxtaposés, dans l'espace de fuite (7), dont les ouvertures d'entrée peuvent être fermée séparément au moyen de la membrane à pince (16).

7. Soupape d'arrêt selon la revendication 1, **caractérisée en ce qu'**au moins un deuxième canal de sortie avec une deuxième soupape de sortie et avec un deuxième espace de fuite disposé entre la soupape d'entrée et la deuxième soupape de sortie est prévu, depuis lequel part un deuxième canal de fuite avec une deuxième soupape de fuite, la deuxième soupape de sortie et la deuxième soupape de fuite étant également des soupapes à pince à actionnement en alternance ayant chacune un moyen d'arrêt.

8. Soupape d'arrêt selon la revendication 7, **caractérisée en ce qu'**un canal de rinçage respectif conduit vers l'espace de fuite et vers le deuxième espace de fuite, lequel canal de rinçage présente une soupape de rinçage qui est réalisée également sous forme de soupape à pince avec un moyen d'arrêt.

9. Soupape d'arrêt selon la revendication 4, **caractérisée en ce que** le canal de fuite et le canal de rinçage sont disposés de telle sorte qu'il n'existe aucun espace mort ne pouvant pas être parcouru par un écoulement de liquide de rinçage.

10. Soupape d'arrêt selon l'une quelconque des revendications 1 à 9, **caractérisée en ce qu'**une fenêtre de vision est disposée dans le canal de fuite (8) et/ou dans l'espace de fuite (7).

11. Soupape d'arrêt selon l'une quelconque des revendications 1 à 10, **caractérisée en ce que** les moyens d'arrêt pour les soupapes à pince peuvent être activés de manière pneumatique et/ou électromécanique.

12. Soupape d'arrêt selon la revendication 11, **caractérisée en ce que** les moyens d'arrêt peuvent être commandés de manière définie de telle sorte que dans une première position de fonctionnement, lorsque la soupape d'entrée est fermée et que la soupape de sortie est fermée, la soupape de fuite est ouverte, et que, dans une deuxième position de fonctionnement, lorsque la soupape d'entrée est ouverte et que la soupape de sortie est ouverte, la soupape de fuite est fermée, et en cas d'inversion entre les deux positions de fonctionnement, à chaque fois dans une position de fonctionnement intermédiaire, la soupape d'entrée, la soupape de sortie et la soupape de fuite sont toutes fermées.

13. Agencement de soupape d'arrêt, **caractérisé en ce que** les canaux de fuite et les canaux de rinçage de plusieurs soupapes d'arrêt (1a, 1b) selon la revendication 2 et l'une quelconque des revendications 3 à 12, sont raccordés les uns aux autres.
